# EUROPEAN PATENT SPECIFICATION

(11) **EP 4 437 050 B1**
(45) Date of publication and mention of the grant of the patent: **16.04.2025**
(21) Application number: 23804822.7
(22) Date of filing: 11.10.2023
(51) Int. Cl.: C09D 11/101, C09D 11/14, C09D 11/322, C09D 11/324, C09D 11/38

(54) **ENERGY-CURABLE FLEXOGRAPHIC BLACK LAMINATING INK**
ENERGIEHÄRTBARE SCHWARZE FLEXOGRAPHISCHE BESCHICHTUNGSTINTE
ENCRE DE STRATIFICATION NOIRE FLEXOGRAPHIQUE DURCISSABLE PAR APPORT D'ÉNERGIE

(30) Priority: 25.10.2022 US 202263419027 P
(43) Date of publication of application: 02.10.2024
(73) Proprietor: Sun Chemical Corporation, Parsippany, NJ 07054 (US)
(72) Inventor: KRISHNAN, Ramasamy, Carlstadt, New Jersey 07072 (US); SCHNEIDER, Mark, Carlstadt, New Jersey 07072 (US); KLEIN, David, Carlstadt, New Jersey 07072 (US)
(74) Representative: Carpmaels & Ransford LLP
(86) International application number: PCT/US2023/034904
(87) International publication number: WO 2024/091386

(56) References cited:
- WO-A1-2022/106854
- CN-A- 1 258 701
- CN-A- 108 676 477

## Description

### CROSS REFERENCE TO RELATED APPLICATIONS

The present application claims priority to US Provisional Application No. 63/419,027, filed 25-October-2022.

### FIELD OF THE INVENTION

The present invention is related to laminating inks. Disclosed are black energy-curable laminating inks. The laminating inks have good bond strength, generally such that lamination construct would be destroyed before the ink would be removed when attempting to pull apart the laminate structure.

### BACKGROUND OF THE INVENTION

There is a need in the industry for a black energy-curable, for example UV-curable, flexographic ink that would yield destruct adhesive lamination bond strength (i.e. the bond strength between the ink and substrate would be such that the lamination construct would be destroyed before the ink would be removed when attempting to pull apart the laminated structure) without using a primer. Currently, to achieve such good bond strength it is generally necessary to first apply a primer to the substrate.

WO 2022/106854 refers to a UV-curable ink composition that optionally comprises cellulose acetate butyrate (CAB). It also specifically points out the benefits of using CAB in UV flexographic inks. However, there is no mention of aminosilane.

DE 4307766 refers to a cationic UV-curable flexographic printing ink, which comprises CAB in an amount of 0.5 to 3%. However, there is no mention of aminosilane.

WO 2008/094863 mentions the use of CAB in lithographic inks, but there is no use in flexographic ink systems. Furthermore, there is no mention of aminosilane.

WO 2022/109230 discloses a two part ink or coating system, wherein Part A comprises CAB and aminoplast crosslinkers. However, there is no mention of aminosilane.

Citation or identification of any document in this application is not an admission that such represents prior art to the present invention.

### BRIEF SUMMARY OF THE INVENTION

The present invention provides energy-curable black laminating inks and coatings that exhibit good color density and good lamination bond strength. The ink and coating compositions comprise cellulose acetate butyrate, aminosilanes, and acrylated monomers and/or acrylated acrylated oligomers.

The present invention provides an energy-curable black ink or coating composition, comprising:
(a) 50 wt% to 80 wt% one or more ethylenically unsaturated monomers, or one or more ethylenically unsaturated oligomers, or a combination of one or more ethylenically unsaturated monomers and one or more acrylated oligomers, based on the total weight of the composition;
(b) 0.5 wt% to 15 wt% one or more photoinitiators, based on the total weight of the ink or coating composition;
(c) 10 wt% to 25 wt% one or more black pigments, based on the total weight of the ink or coating composition;
(d) 0.1 wt% to 3.5 wt% one or more aminosilanes, based on the total weight of the ink or coating composition; and
(e) 0.1 wt% to 5 wt% one or more cellulose acetate butyrate resins, based on the total weight of the ink or coating composition;
wherein the composition has a color density of equal to or greater than 1.75 when printed and cured on a substrate.

Preferred ethylenically unsaturated monomers and oligomers are acrylated monomers and oligomers.

In certain embodiments, at least one of the acrylated oligomers is ethoxylated trimethylolpropane(EO)9 triacrylate water-compatible oligomer.

In some embodiments, preferably, the ink and coating compositions comprise less than or equal to 10 wt% total photoinitiators. In certain embodiments, the compositions contain less than or equal to 9 wt%, or 8 wt%, or 7 wt% total photoinitiators.

In preferred embodiments, when applied to a substrate and cured, and used in a laminate structure, the inks and coatings of the invention exhibit a lamination bond strength of equal to or greater than 50 g/linear inch (19.69 g.cm). Preferably, the cured inks and coatings in a laminate structure exhibit destruct bond strength.

In some embodiments, the ink and coating compositions are flexographic inks and coatings.

These and other objects, advantages, and features of the invention will become apparent to those persons skilled in the art upon reading the details of the formulations and methods as more fully described below.

### DETAILED DESCRIPTION OF THE INVENTION

The present invention provides an energy-curable lamination ink or coating composition that addresses the need in the industry for a black UV curing flexographic ink that would yield destruct adhesive lamination bond strength (i.e. the bond strength between the ink and substrate would be such that the lamination construct would be destroyed before the ink would be removed when attempting to pull apart the laminated structure) without using a primer as it is currently practiced. The print construct described here can meet this performance property without the need for a primer to facilitate adhesion of the ink to the substrate. In one embodiment, the black ink would be formulated such that it would exhibit a color density of ≥ 1.75, or ≥ 2.00, or ≥ 2.20 with a single layer when printed on a Harper QD printing and proofing system with a Harper flexo bladed hand proofer, 5.0 BCM/500-line anilox, cured with a UVEXS curing unit at a dose of approximately 70 mJ/cm², and the density measured with an X-Rite 428 densitometer. It is this combination of high color density and destruct bond strength that is the inventive feature of the present application.

Color density is a function of the amount of light reflected from the ink/substrate layer (reflectance density). As ink thickness or pigment concentration is increased, more light is absorbed (and hence less light is reflected) and the densitometer (instrument used to measure color density) yields a higher number for color density. Measuring color density is important because it is one way to determine if the amount of ink being printed to the substrate is changing over time. The following websites provide further discussion on color density: https://www.xrite.com/blog/densitometer-density-measurement and https://xritephoto.com/documents/literature/en/L7-093_Understand_Dens_en.pdf.

In a further embodiment, the black ink could be formulated to meet specific customer L*a*b* values. These values represent the following: L* is the lightness value; a* is the red/green value, where positive values indicate amounts of red, and negative values indicate amounts of green; and b* is the yellow/blue value, where positive values indicate amounts of yellow, and negative values indicate amounts of blue. It is important to understand that density is not color. Density represents how light or dark the color is, not if the color is correct. To determine if the color correct, one needs to compare the color to a set of standard values in a color space system, such as CIELAB. In one embodiment, the black ink would be modified with other pigments or colorants to shift the shade to a color value as required by the customer using the L*a*b* color system.

It is to be understood that the foregoing general description and the following detailed description are exemplary and explanatory only, and are not restrictive of any subject matter claimed.

Headings are used solely for organizational purposes, and are not intended to limit the invention in any way.

Unless otherwise defined, all technical and scientific terms used herein have the same meaning as is commonly understood by one of skill in the art to which the inventions belong. Although any methods and materials similar or equivalent to those described herein can be used in the practice or testing of the present invention, the preferred methods are described.

### Definitions

In this application, the use of the singular includes the plural unless specifically stated otherwise. As used herein, the singular forms "a," "an" and "the" are intended to include the plural forms as well, unless the context clearly indicates otherwise.

In this application, the use of "or" means "and/or" unless stated otherwise. Also, when it is clear from the context in which it is used, "and" may be interpreted as "or," such as in a list of alternatives where it is not possible for all to be true or present at once.

As used herein, the terms "comprises" and/or "comprising" specify the presence of the stated features, integers, steps, operations, elements, and/or components, but do not preclude the presence or addition of one or more other features, integers, steps, operations, elements, components, and/or groups thereof. Furthermore, to the extent that the terms "includes," "having," "has," "with," "composed," "comprised" or variants thereof are used in either the detailed description or the claims, such terms are intended to be inclusive in a manner similar to the term "comprising."

When the terms "consist of", "consists of" or "consisting of" is used in the body of a claim, the claim term set off with "consist of", "consists of" and/or "consisting of" is limited to the elements recited immediately following "consist of", "consists of" and/or "consisting of", and is closed to unrecited elements related to that particular claim term. The term 'combinations thereof', when included in the listing of the recited elements that follow "consist of", "consists of" and/or "consisting of" means a combination of only two or more of the elements recited.

As used herein, ranges and amounts can be expressed as "about" a particular value or range. "About" is intended to also include the exact amount. Hence "about 5 percent" means "about 5 percent" and also "5 percent." "About" means within typical experimental error for the application or purpose intended.

It is to be understood that wherein a numerical range is recited, it includes the end points, all values within that range, and all narrower ranges within that range, whether specifically recited or not.

Throughout this disclosure, all parts and percentages are by weight (wt% or mass% based on the total weight) and all temperatures are in °C unless otherwise indicated.

As used herein, "substrate" means any surface or object to which an ink or coating can be applied. Substrates include, but are not limited to, cellulose-based substrates, paper, paperboard, fabric (e.g. cotton), leather, textiles, felt, concrete, masonry, stone, plastic, plastic or polymer film, spunbond non-woven fabrics (e.g. consisting of polypropylene, polyester, and the like) glass, ceramic, metal, wood, composites, combinations thereof, and the like. Substrates may have one or more layers of metals or metal oxides, or other inorganic materials.

As used herein, the term "article" or "articles" means a substrate or product of manufacture. Examples of articles include, but are not limited to: substrates such as cellulose-based substrates, paper, paperboard, plastic, plastic or polymer film, glass, ceramic, metal, composites, and the like; and products of manufacture such as publications (e.g. brochures), labels, and packaging materials (e.g. cardboard sheet or corrugated board), containers (e.g. bottles, cans), a polyolefin (e.g. polyethylene or polypropylene), a polyester (e.g. polyethylene terephthalate), a metalized foil (e.g. laminated aluminum foil), metalized polyester, a metal container, and the like.

As used herein, "ink(s) and coating(s)," "ink(s)," "coating(s)," "ink or coating composition(s)", and "composition(s)" are used interchangeably, and refer to compositions of the invention, or, when specified, compositions found in the prior art (comparative). Inks and coatings typically contain resins, solvent, and, optionally, colorants. Coatings are often thought of as being colorless or clear, while inks typically include a colorant. However, in some embodiments, a coating can also include a colorant, depending on the intended use.

As used herein, "energy-curing" refers to the cure achieved under exposure to various electromagnetic radiation sources producing an actinic effect. Such sources include but are not limited to, electron-beam, UV-light, visible-light, IR, or microwave. Where the compositions are cured under the action of UV light, then non-limiting UV sources such as the following can be used: low pressure mercury bulbs, medium pressure mercury bulbs, a xenon bulb, excimer lamps, a carbon arc lamp, a metal halide bulb, a UV-LED lamp or sunlight. It should be appreciated by those skilled in the art that any UV light source may be used to cure compositions prepared according to the current invention. Compositions of the current invention are especially suited for use in compositions curable under the action of UV light and/or electron-beam.

As used herein, "energy-curable" refers to a composition that can be cured by exposure to one or more types of actinic radiation. Compositions of the current invention are especially suited for use in compositions curable under the action of UV light and/or electron-beam.

As used herein, "(meth)acrylate" and "(meth)acrylic acid" include both acrylate and methacrylate, and acrylic and methacrylic acid.

As used herein, "monofunctional" means having one functional group.

As used herein, "multifunctional" means having two or more functional groups. A multifunctional monomer, for example, can be di-functional, tri-functional, tetra-functional, or have a higher number of functional groups. The two or more functional groups can be the same or different. Unless specified otherwise, as used herein, "multifunctional" refers to a compound having two or more of the same functional group, e.g. diacrylate.

As used herein, "monomer" refers to a small molecule having one or more functional groups. Monomers react with other monomers, either the same or different, to form monomer chains (oligomers and/or polymers). Each monomer in a chain is a monomer repeating unit. A monomer is the smallest unit that makes up an oligomer or a polymer. A monomer is a low molecular weight molecule, usually less than or equal to 100 Daltons weight average molecular weight (Mw).

As used herein, "oligomer" refers to a chain of a few monomer repeating units. Oligomers are a few to several monomer units long chains, and have a mid-range weight average molecular weight of about 100 Daltons to about 10,000 Daltons. Oligomers may have functional groups.

As used herein, "polymer" refers to a large molecule, containing multiple monomer and/or oligomer repeating units. Polymers are high molecular weight molecules, having a weight average molecular weight of greater than about 10,000 Daltons. Polymers, for example acrylate modified polymers, may have functional groups. A polymer can also be referred to as a resin.

As used herein, "color density" refers to reflection density of a printed ink, and is a function of the percentage of light reflected. Ink layers that are thick, or have a high pigment concentration, will reflect less light. It is usually measured on a scale of 0.0 to 4.0 density units, where the values of density are approximately 100% reflectance is 0.0; 10% reflectance is 1.0; 1% reflectance is 2.0; 0.1% reflectance is 3.0; and 0.01% or less reflectance is 4.0 D. That is, the higher the density value, the less reflectance is, which means that the ink is either printed as a thicker layer, or has a higher concentration of pigment. Density is generally measured on a dried ink or coating, but can also be measured while the ink or coating is still wet.

As used herein, "bond strength," "lamination bond strength" and like refers to the amount of force necessary to separate a laminate structure. It is measured in g/linear inch. "Destruct bond strength" means that the substrate tears before the adhesive bond is pulled apart.

### Energy-curable ink and coating compositions

Features and advantages of the energy-curable black laminating ink and coating compositions of the present invention include:
- The novelty of the present invention is the combination of amino silane (for example, Silquest A-Link 600) and cellulose acetate butyrate (CAB) resin (for example, CAB551-0.01) with sufficient bond strength in a UV curable flexographic laminating ink. The level of CAB is from 1 wt% to 5 wt%, based on the total weight of the ink or coating composition.
- The high color strength is achieved, in part, by using trimethylolpropane(EO)9 triacrylate (for example, Miwon M3190) to disperse pigment. This is an ethoxylated water compatible oligomer with a preferred ethoxylation value of 9-15 EO units. Oligomers modified with less than 9 EO units or more than 15 EO units tend to yield black pigment dispersions with poor flow and color strength, which are indicators of a poor pigment dispersion.
- Reduced level of photoinitiators to reach a cured state i.e. the ink of the present invention contains approximately 7-10% total photoinitiator, while a standard UV laminating ink contains approximately 18-22% photoinitiator (NWUV-1536, Sun Chemical). Without wishing to be bound by theory, the inventors hypothesize that the reduced photoinitiator level is at least in part a direct response to the better dispersion quality achieved with the use of trimethylolpropane(EO)9 triacrylate, allowing a lower total pigment level in the final ink while reaching the same target density. A lower pigment concentration in the ink allows more UV radiation to penetrate deeper into the ink film resulting in a better cured film with less total photoinitiator.
- A primer is not required for the ink to adhere to the substrate and to yield destruct lamination bonds. This is unexpected as a primer is typically required to achieve the proper lamination bond strength.
- Ability to achieve targets printing at high speed. The meaning of "Targets" in this usage is a specification set by the customer. Specifically, the ability to reach density or L*a*b* color targets while running at a specific press speed and resulting in a laminated structure that hits the target of destruct bonds when attempting to peel apart the laminated structure.

Below are examples of the raw materials that could be suitable for the ink and coating compositions of the present invention. However, it should be noted that there is no specific limitation on the materials, as long as the formulation contains a combination of an alkoxylated acrylate monomer and/or oligomer (e.g. ethoxylated trimethylolpropane(EO)9 triacrylate water compatible oligomer), cellulose acetate butyrate (CAB), and aminosilane.

### Energy-curable monomers/oligomers

Examples of suitable monofunctional ethylenically unsaturated monomers include, but are not limited, to the following: isobutyl acrylate; cyclohexyl acrylate; iso-octyl acrylate; n-octyl acrylate; isodecyl acrylate; iso-nonyl acrylate; octyl/decyl acrylate; lauryl acrylate; 2-propyl heptyl acrylate; tridecyl acrylate; hexadecyl acrylate; stearyl acrylate; iso-stearyl acrylate; behenyl acrylate; tetrahydrofurfuryl acrylate; 4-t.butyl cyclohexyl acrylate; 3,3,5-trimethylcyclohexane acrylate; isobornyl acrylate; dicyclopentyl acrylate; dihydrodicyclopentadienyl acrylate; dicyclopentenyloxyethyl acrylate; dicyclopentanyl acrylate; benzyl acrylate; phenoxyethyl acrylate; 2-hydroxy-3-phenoxypropyl acrylate; alkoxylated nonylphenol acrylate; cumyl phenoxyethyl acrylate; cyclic trimethylolpropane formal acrylate; 2(2-ethoxyethoxy) ethyl acrylate; polyethylene glycol monoacrylate; polypropylene glycol monoacrylate; caprolactone acrylate; ethoxylated methoxy polyethylene glycol acrylate; methoxy triethylene glycol acrylate; tripropyleneglycol monomethyl ether acrylate; diethyleneglycol butyl ether acrylate; alkoxylated tetrahydrofurfuryl acrylate; ethoxylated ethyl hexyl acrylate; alkoxylated phenol acrylate; ethoxylated phenol acrylate; ethoxylated nonyl phenol acrylate; propoxylated nonyl phenol acylate; polyethylene glycol o-phenyl phenyl ether acrylate; ethoxylated p-cumyl phenol acrylate; ethoxylated nonyl phenol acrylate; alkoxylated lauryl acrylate; ethoxylated tristyrylphenol acrylate; N-(acryloyloxyethyl)hexahydrophthalimide; N-butyl 1,2 (acryloyloxy) ethyl carbamate; acryloyl oxyethyl hydrogen succinate; octoxypolyethylene glycol acrylate; octafluoropentyl acrylate; 2-isocyanato ethyl acrylate; acetoacetoxy ethyl acrylate; 2-methoxyethyl acrylate; dimethyl aminoethyl acrylate; 2-carboxyethyl acrylate; 4-hydroxy butyl acrylate; combinations thereof, and the like. As used herein, the term ethoxylated refers to chain extended compounds through the use of ethylene oxide, propoxylated refers to chain extended compounds through the use of propylene oxide, and alkoxylated refers to chain extended compounds using either or both ethylene oxide and propylene oxide. Equivalent methacrylate compounds are also capable of being used, although those skilled in the art will appreciate that methacrylate compounds have lower reactivity than their equivalent acrylate counterparts.

Examples of suitable multifunctional ethylenically unsaturated monomers include but are not limited to the following: 1,3-butylene glycol diacrylate; 1,4-butanediol diacrylate; neopentyl glycol diacrylate; ethoxylated neopentyl glycol diacrylate; propoxylated neopentyl glycol diacrylate; 2-methyl-1,3-propanediyl ethoxy acrylate; 2-methyl-1,3-propanediol diacrylate; ethoxylated 2-methyl-1,3-propanediol diacrylate; 3 methyl 1,5- pentanediol diacrylate; 2-butyl-2-ethyl-1,3-propanediol diacrylate; 1,6-hexanediol diacrylate; alkoxylated hexanediol diacrylate; ethoxylated hexanediol diacrylate; propoxylated hexanediol diacrylate; 1,9-nonanediol diacrylate; 1,10 decanediol diacrylate; ethoxylated hexanediol diacrylate; alkoxylated hexanediol diacrylate; diethyleneglycol diacrylate; triethylene glycol diacrylate; tetraethylene glycol diacrylate; polyethylene glycol diacrylate; propoxylated ethylene glycol diacrylate; dipropylene glycol diacrylate; tripropyleneglycol diacrylate; polypropylene glycol diacrylate; poly (tetramethylene glycol) diacrylate; cyclohexane dimethanol diacrylate; ethoxylated cyclohexane dimethanol diacrylate; alkoxylated cyclohexane dimethanol diacrylate; polybutadiene diacrylate; hydroxypivalyl hydroxypivalate diacrylate; tricyclodecanedimethanol diacrylate; 1,4-butanediylbis[oxy(2-hydroxy-3,1-propanediyl)]diacrylate; ethoxylated bisphenol A diacrylate; propoxylated bisphenol A diacrylate; propoxylated ethoxylated bisphenol A diacrylate; ethoxylated bisphenol F diacrylate; 2-(2-vinyloxyethoxy)ethyl acrylate; dioxane glycol diacrylate; ethoxylated glycerol triacrylate; glycerol propoxylate triacrylate; pentaerythritol triacrylate; trimethylolpropane triacrylate; caprolactone modified trimethylol propane triacrylate; ethoxylated trimethylolpropane triacrylate; propoxylated trimethylol propane triacrylate; tris (2-hydroxy ethyl) isocyanurate triacrylate; e-caprolactone modified tris (2-hydroxy ethyl) isocyanurate triacrylate; melamine acrylate oligomer; pentaerythritol tetraacrylate; ethoxylated pentaerythritol tetraacrylate; di-trimethylolpropane tetra acrylate; dipentaerythritol pentaacrylate; dipentaerythritol hexaaacrylate; ethoxylated dipentaerythritol hexaacrylate; combinations thereof, and the like. The term ethoxylated refers to chain extended compounds through the use of ethylene oxide, propoxylated refers to chain extended compounds through the use of propylene oxide, and alkoxylated refers to chain extended compounds using either or both ethylene oxide and propylene oxide. Equivalent methacrylate compounds are also capable of being used, although those skilled in the art will appreciate that methacrylate compounds have lower reactivity than their equivalent acrylate counterparts.

Other functional monomer classes capable of being used in part in these formulations include cyclic lactam such as N-vinyl caprolactam; N-vinyl oxazolidinone and N-vinyl pyrrolidone, and secondary or tertiary acrylamides such as N-acryloyl morpholine; diacetone acrylamide; N-methyl acrylamide; N-ethyl acrylamide; N-isopropyl acrylamide; N-*t*-butyl acrylamide; N-hexyl acrylamide; N-cyclohexyl acrylamide; N-octyl acrylamide; N-*t*-octyl acrylamide; N-dodecyl acrylamide; N-benzyl acrylamide; N-(hydroxymethyl)acrylamide; N-isobutoxymethyl acrylamide; N- butoxymethyl acrylamide; N,N-dimethyl acrylamide; N,N-diethyl acrylamide; N,N-propyl acrylamide; N,N-dibutyl acrylamide; N,N-dihexyl acrylamide; N,N-dimethylamino methyl acrylamide; N,N-dimethylamino ethyl acrylamide; N,N-dimethylamino propyl acrylamide; N,N-dimethylamino hexyl acrylamide; N,N-diethylamino methyl acrylamide; N,N-diethylamino ethyl acrylamide; N,N-diethylamino propyl acrylamide; N,N-dimethylamino hexyl acrylamide; and N,N'-methylenebisacrylamide.

Energy-curable oligomers, comprising several units of any of the aforementioned monomers, are also understood to be included in the list of energy-curable compounds. Suitable oligomers include ethoxylated trimethylolpropane(EO)9 triacrylate water-compatible oligomer, ethoxylated trimethylolpropane(EO)5 triacrylate water-compatible oligomer, ethoxylated trimethylolpropane(EO)3 triacrylate water-compatible oligomer, and combinations thereof. The term "(EO)9" means that the oligomer has about 9 ethoxy groups, "(EO)5" means the oligomer has about 5 ethoxy groups, etc.

In preferred embodiments, the ethylenically unsaturated monomers and/or oligomers are acrylated. A preferred acrylated oligomer is ethoxylated trimethylolpropane(EO)9 triacrylate water-compatible oligomer.

The compositions of the invention typically comprise about 50 wt% to about 80 wt% energy-curable monomers and/or oligomers, based on the total weight of the composition. Note that the amount (wt%) is the total amount of monomers and/or oligomers, i.e. the sum of all the monomers and oligomers included in the composition.

### Cellulose acetate butyrate (CAB) resins

Cellulose acetate butyrate (CAB) is a cellulose ester, where the hydroxyl groups attached to the glycoside rings in cellulose are substituted, either partially or fully, by acetyl and butyryl groups. Different properties can be obtained by varying the ratio between the acetyl and butyryl substitution. Degree of substitution and the molecular weight can be adjusted to vary material properties. The glass transition temperature (Tg) of CAB resins varies, depending on the type. CAB is easy to dissolve in most bulk solvents, produces transparent films, and the films are resistant to water.

The type of CAB used in the present invention is not limited. A range of CAB resins are available from Eastman, which vary in acetyl, butyryl, and hydroxyl content, and have varying viscosities. One of ordinary skill in the art can choose the type of CAB depending on the desired properties of the ink or coating film. Suitable CAB resins include, but are not limited to, CAB-171-15, CAB-321-0.1, CAB-381-0.1, CAB-381-0.5, CAB-381-2 BP, CAB-381-2, CA-381-20 BP, CAB-381-20, CAB-500-5, CAB-531-1, CAB-551-0.01 Food Contact, CAB-551-0.01, CAB-551-0.2, and CAB-553-0.4, all from Eastman; cellulose acetate butyrate Cat. No. 77, from Scientific Polymer Products, Inc.; cellulose acetate butyrate Cat. No. 404255000 from Thermo Fisher Scientific; cellulose acetate butyrate CAS # 9004-36-8, available as several products with varying molecular weight from Sigma Aldrich; CAS RN 9004-36-8 cellulose acetate butyrate having molecular formula C₈₄H₁₃₀O₄₉ and molecular weight of 1923.90 g/mol from Spectrum Chemical MFG Corp; and CAB from other suppliers, such as LeapChem.

The ink and coating compositions of the present invention typically contain CAB resin in an amount of about 1 wt% to about 5 wt%, based on the total weight of the composition. Note that the amount (wt%) is the total amount of CAB resins, i.e. the sum of all the CAB resins included in the composition.

### Aminosilanes

Aminosilanes, often used as crosslinkers, are silicon organic compounds having at least one Si-NR₂ bond, where R is hydrocarbon or hydrocarbyl. Up to four amino moieties can be bound to one silicon atom. Aminosilanes include compounds having primary and/or secondary and/or tertiary amine groups.

Suitable aminosilanes include, but are not limited to 3-aminopropyltrimethoxysilane; 3-aminopropyltriethoxysilane; 3-aminopropyldiisopropylethoxysilane; 3-aminopropyldimethylethoxysilane; 3-aminopropylmethyldiethoxysilane; (p, m)-aminophenyltrimethoxysilane; 3-aminopropyltris(methoxyethoxyethoxy)silane; 3-aminopropylsilanetriol; 3-(3-aminophenoxy)propyltrimethoxysilane; 4-aminobutyltriethoxysilane; N-(6-aminohexyl)aminopropyltrimethoxysilane; N-(6-aminohexyl)aminomethyltriethoxysilane; 3-(2-aminoethylamino)propyltrimethoxysilane; (aminoethylaminomethyl)phenethyltrimethoxysilane; N-phenyl-aminomethyltrimethoxysilane; N-cyclohexyl-aminomethyltrimethoxysilane; aminomethyltrimethoxysilane; N-phenyl-3-aminopropyltrimethoxysilane; N-methyl-3-aminopropyltrimethoxysilane; N-butyl-3-aminopropyltrimethoxysilane, 4-amino-3,3-dimethylbutyltrimethoxysilane; N-cyclohexyl-3-aminopropyltrimethoxysilane; dibutyl maleate adduct of 3-aminopropyltrimethoxysilane; dibutyl maleate adduct of 4-amino-3,3-dimethylbutyltrimethoxysilane; 3-aminopropyltriethoxysilane; bis-(3-trimethoxysilylpropyl)amine; 3-aminopropylmethyldimethoxysilane; 3-aminopropyldimethyl(methylethyloximato)silane; N-methyl-3-amino-2-methylpropyltrimethoxysilane; N-ethyl-3-amino-2-methylpropyltrimethoxysilane, N-ethyl-3-amino-2-methylpropyldiethoxymethylsilane; N-ethyl-3 -amino -2-methylpropyltriethoxysilane; N-ethyl-3-amino-2-methylpropylmethyldimethoxysilane; N-butyl-3-amino-2-5-methylpropyltrimethoxysilane; 3-(N-methyl-2-amino-1-methyl-1-ethoxy)propyltrimethoxysilane; N-ethyl-4-amino3,3-dimethylbutyldimethoxymethylsilane; N-ethyl-4-amino3,3-dimethylbutyltrimethoxysilane; bis-(3-trimethoxysilyl-2-methylpropyl)amine, N-(3'-trimethoxysilylpropyl)-3-amino-2-methylpropyltrimethoxysilane; 3-mercaptopropyltrimethoxysilane; 3-mercaptopropyltri-ethoxysilane; 3-mercaptopropylmethyldimethoxysilane; 3-ureidopropyltrimethoxysilane; 3-ureidopropylmethyldimethoxysilane; O-(3-trimethoxysilylpropyl)carbamate; and combinations thereof.

Other suitable aminosilanes include, but are not limited to, N,N'-Bis(trimethylsilyl)-1,2-ethylenediamine; N,N'-Bis(trimethylsilyl)-1,2-diaminobenzene; N,N'-Bis(trimethylsilyl)-(±)-trans-1,2-diaminocyclohexane; N,N'-Bis(trimethylsilyl)-2-aminobenzylamine; N,N'-Bis(trimethylsilyl)-1,8-diaminonaphthalene; spiro-Bis(N,N'-1,2-ethylene-bis-(trimethylsilylamino))silane; N,N'-1,2-ethylene-bis-(trimethylsilylamino))dimethylsilane; spiro-Bis(N,N'-o-phenyleneamino(trimethylsilylamino))silane; N,N'-(N-trimethylsilyl-o-phenylenediamino)dimethylsilane; spiro-Bis(N,N'-2-aminobenzylamino)silane; spiro-Bis(N-trimethylsilyl-N,N'-2-aminobenzylamino)silane; spiro-Bis(N,N'-1,8-diaminonaphthalenyl)silane; (N,N'-1,8-diaminonaphthalenyl)dimethylsilane; and combinations thereof.

Commercially available aminosilanes that are suitable for use in the present invention include, but are not limited to, Silquest A-Link 600, Silquest A-1100, Silquest A-1101, Silquest A-1102, Silquest VS-142, Silquest A-1110, Silquest A-1120J, Silquest A-1126, Silquest A-1128, Silquest A-1130, Silquest A-1170, Silquest Y-11699, Silquest Y-9669, Silquest A-Link 17, Silquest VX-225, Silquest &-15744, Silquest A-Link 235, Silquest A-1387, and Silquest A-2387, all from Momentive Performance Materials,Inc.; KBE-903, KBM-602, KBM-603, KBM-903, X-2-1172ES, KBM-573, KBM-575, KBM-6803, and X-12-972F, all from Shin-Etsu Chemical Co., Ltd.; Cat. Nos. A3648, 2281778, and 440140, from Sigma-Aldrich; HENGDA-E8133, HENGDA-M8133, HENGDA-M8253, HENGDA-M8252, HENGDA-M8132, and HENGDA-E8132, all from Qingdao Hengda New Material Technology Co.; Dynasylan-1122, Dynasylan-1124, Dynasylan-1505, Dynasylan-AMEO, Dynasylan-AMEO-T, Dynasylan-AMMO, Dynasylan-SIVO 210, Dynasylan-SIVO 214, and Dynasylan-TRIAMO, all from Evonik Industries.

The compositions of the invention typically comprise about 0.1 wt% to about 3.5 wt% total aminosilanes, based on the total weight of the composition. Note that the amount is the total amount of aminosilanes included in the composition, i.e. the sum of all aminosilanes included in the composition.

### Colorants

The energy-curable ink or coating compositions of the present invention comprise one or more black colorants. Typically, the black energy-curable ink or coating compositions of the present invention comprise about 10 wt% to about 25 wt% total black colorants, based on the total weight of the composition. Note that the amount is the total amount of all black colorants in the composition, i.e. the sum of all black colorants included in the composition.

Black colorants may be carbon based, iron (ferric) oxide based, perylene based, azine dye based, graphite based, manganese based, or powdered slate based, among others. Suitable black colorants include, but are not limited to, carbon black, Pigment Black 7 (a carbon black), Special Black 250 pigment (comprising Pigment Black 7), Pigment Black 1, Pigment Black 6, Pigment Black 8, Pigment Black 9, Pigment Black 10, Pigment Black 11, Pigment Black 14, Pigment Black 19, Pigment Black 31, and the like.

In some embodiments, additional colorants may be added to the energy-curable ink or coating compositions. There is no limitation on the types of other colorants that can be added to the compositions. Other colorants are added to black pigments to make different colors. Examples of colorant mixtures include, but are not limited to, carbon black can be mixed with Quinacridone Magenta (PR 122) and Indanthrene Blue (PB 60) to make violet-grey; Pigment Black 6 can be mixed with Benzimidazolone Yellow (PY 175) to make acidic greens. One of ordinary skill in the art can choose a colorant based on the desired final color. As discussed above, other colorants can be added to obtain the required values for L*a*b* target color demanded by a customer.

Suitable additional colorants include, but are not limited to organic or inorganic pigments and dyes. The dyes include but are not limited to azo dyes, anthraquinone dyes, xanthene dyes, azine dyes, combinations thereof and the like. Organic pigments may be one pigment or a combination of pigments, such as for instance Pigment Yellow Numbers 12, 13, 14, 17, 74, 83, 114, 126, 127, 138, 150, 155, 174, 180, 181, 188; Pigment Red Numbers 2, 22, 23, 48:1, 48:2, 52, 52:1, 53, 57:1, 112, 122, 166, 170, 176, 184, 202, 254, 266, 269; Pigment Orange Numbers 5, 16, 34, 36; Pigment Blue Numbers 15, 15:3, 15:4; Pigment Violet Numbers 3, 19, 23, 27; and/or Pigment Green Number 7. Inorganic pigments may be one of the following non-limiting pigments: iron oxides, titanium dioxides, chromium oxides, ferric ammonium ferrocyanides Pigment White Numbers 6 and 7, and the like. Other organic and inorganic pigments and dyes can also be employed, as well as combinations that achieve the colors desired.

When included, additional colorants are typically present in the energy-curable ink and coating compositions in an amount of about 0.1 wt% to about 2.0 wt%, based on the total weight of the composition. Note that the amount is the total amount of additional colorants in the composition, i.e. the sum of all of the additional colorants included in the composition.

### Resins / inert resins

The radiation-curable compositions of the present invention may contain inert, non-curable resins having no curable acrylic groups with a number average molecular weight of 1000 to 30,000 Daltons, preferably 1000 to 4000 Daltons. Such resins include, but are not limited to, poly(acrylates), poly(ester), poly(urethanes), poly(amides), ketone resins, aldehyde resins, alkyd resins, phenol-formaldehyde resins, rosin resins, hydrocarbon resins, alkyd resins, or mixtures of the aforementioned. For example, resins may include alkyds, phenolics, nitrocellulose, polyamides, vinyls, acrylics, rosin esters, hydrocarbons, polyurethanes, epoxies, polyesters, styrenes, urea, and melamine-formaldehydes. Such resins improve pigment wetting, gloss, rheology, and flexibility.

When present, the resins / inert resins are typically present in the compositions of the present invention in an amount of about 0.5 wt% to about 15.0 wt%, based on the total weight of the composition. Note that the amount is the total amount of resins/inert resins in the composition, i.e. the sum of all of the resins/inert resins included in the composition.

### Photoinitiators

There is no restriction on the type, blend or concentration of photoinitiator used and can include any suitable type of photoinitiators, such as, but not limited to: α-hydroxyketones, acyl phosphine oxides, α-aminoketones, thioxanthones, benzophenones, phenylglyoxylates, oxime esters, and combinations thereof.

Suitable α-hydroxyketones include, but are not limited to: 1-hydroxy-cyclohexyl-phenyl-ketone; 2-hydroxy-2-methyl-1-phenyl-1-propanone; 2-hydroxy-2-methyl-4'-tert-butyl-propiophenone; 2-hydroxy-4'-(2-hydroxyethoxy)-2-methyl-propiophenone; 2-hydroxy-4'-(2-hydroxypropoxy)-2-methyl-propiophenone; oligo 2-hydroxy-2-methyl-1-[4-(1-methylvinyl)phenyl]propanone; bis[4-(2-hydroxy-2-methylpropionyl)phenyl]methane; 2-hydroxy-1-[1-[4-(2-hydroxy-2-methylpropanoyl)phenyl]-1,3,3-trimethylindan-5-yl]-2-methylpropan-1-one; 2-hydroxy-1-[4-[4-(2-hydroxy-2-methylpropanoyl)phenoxy]phenyl]-2-methylpropan-1-one; and combinations thereof.

Suitable acylphosphine oxides include, but are not limited to: 2,4,6-trimethylbenzoyldiphenylphosphine oxide; ethyl-(2,4,6-trimethylbenzoyl)phenyl phosphinate; bis-(2,4,6-trimethylbenzoyl)-phenylphosphine oxide; and combinations thereof.

Suitable α-aminoketones include, but are not limited to: 2-methyl-1-[4-methylthio)phenyl]-2-morpholinopropan-1-one; 2-benzyl-2-dimethylamino-1-(4-morpholinophenyl)-butan-1-one; 2-dimethylamino-2-(4-methyl-benzyl)-1-(4-morpholin-4-yl-phenyl)-butan-1-one; and combinations thereof.

Suitable thioxanthones include, but are not limited to: 2-4-diethylthioxanthone, isopropylthioxanthone, 2-chlorothioxanthone, and 1-chloro-4-propoxythioxanthone; and combinations thereof.

Suitable benzophenones include, but are not limited to: benzophenone, 4-phenylbenzophenone, and 4-methylbenzophenone; methyl-2-benzoylbenzoate; 4-benzoyl-4-methyldiphenyl sulphide; 4-hydroxybenzophenone; 2,4,6-trimethyl benzophenone, 4,4-bis(diethylamino)benzophenone; benzophenone-2-carboxy(tetraethoxy)acrylate; 4-hydroxybenzophenone laurate; 1-[-4-[benzoylphenylsulpho]phenyl]-2-methyl-2-(4-methylphenylsulphonyl)propan-1-one; and combinations thereof.

Suitable phenylglyoxylates include, but are not limited to: phenyl glyoxylic acid methyl ester; oxy-phenyl-acetic acid 2-[hydroxyl-ethoxy]-ethyl ester; oxy-phenyl-acetic acid 2-[2-oxo-2-phenyl-acetoxy-ethoxy]-ethyl ester; and combinations thereof.

Suitable oxime esters include, but are not limited to: 1-phenyl-1,2-propanedione-2-(O-ethoxycarbonyl)oxime; [1-(4-phenylsulfanylbenzoyl)heptylideneamino]benzoate; [1-[9-ethyl-6-(2-methylbenzoyl)carbazol-3-yl]-ethylideneamino]acetate; and combinations thereof.

Examples of other suitable photoinitiators include diethoxy acetophenone; benzil; benzil dimethyl ketal; titanocen radical initiators such as titanium-bis( 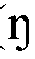 5-2,4-cyclopentadien-1-yl)-bis-[2,6-difluoro-3-(1H-pyrrol-1-yl)phenyl]; 9-fluorenone; camphorquinone; 2-ethyl anthraquinone; and the like.

Polymeric photoinitiators and sensitizers are also suitable, including, for example, polymeric aminobenzoates (GENOPOL AB-1 or AB-2 from RAHN; Omnipol ASA from IGM or Speedcure 7040 from Lambson), polymeric benzophenone derivatives (GENOPOL BP-1 or BP-2 from RAHN; Omnipol BP, Omnipol BP2702 or Omnipol 682 from IGM or Speedcure 7005 from Lambson); polymeric thioxanthone derivatives (GENOPOL TX-1 or TX-2 from RAHN, Omnipol TX from IGM or Speedcure 7010 from Lambson); polymeric aminoalkylphenones such as Omnipol 910 from IGM; polymeric benzoyl formate esters such as Omnipol 2712 from IGM; and the polymeric sensitizer Omnipol SZ from IGM.

The compositions of the present invention typically comprise a total amount of all photoinitiators (the sum of all photoinitiators in the composition) of about 0.5 wt% to about 15.0 wt%, based on the total weight of the composition. Preferably, the compositions of the present invention comprise less than 15 wt% of photoinitiators. Preferably, the compositions of the present invention contain less than 10 wt% total photoinitiators, based on the total weight of the composition, such as less than 9 wt%, or less than 8 wt%, or less than 7 wt%. Note that the amount is the total amount of photoinitiators in the composition, i.e. the sum of all photoinitiators included in the composition.

### Amine synergists

An amine synergist, may also optionally be included in the formulation. Suitable examples include, but are not limited to: aromatic amines, such as 2-(dimethylamino)ethylbenzoate; N-phenyl glycine; benzoic acid, 4-(dimethylamino)-, 1,1'-[(methylimino)di-2,1-ethanediyl] ester; and simple alkyl esters of 4-(N,N-dimethylamino)benzoic acid and other positional isomers of N,N-dimethylamino)benzoic acid esters, with ethyl, amyl, 2-butoxyethyl and 2-ethylhexyl esters being particularly preferred; aliphatic amines, such as such as N-methyldiethanolamine, triethanolamine and triisopropanolamine; aminoacrylates and amine modified polyether acrylates, such as EBECRYL 80, EBECRYL 81, EBECRYL 83, EBECRYL 85, EBECRYL 880, EBECRYL LEO 10551, EBECRYL LEO 10552, EBECRYL LEO 10553, EBECRYL 7100, EBECRYL P115 and EBECRYL P116 available from ALLNEX; CN501, CN550, CN UVA421, CN3705, CN3715, CN3755, CN381 and CN386, all available from Sartomer; GENOMER 5142, GENOMER 5161, GENOMER 5271 and GENOMER 5275 from RAHN; PHOTOMER 4771, PHOTOMER 4967, PHOTOMER 5006, PHOTOMER 4775, PHOTOMER 5662, PHOTOMER 5850, PHOTOMER 5930, and PHOTOMER 4250 all available from IGM, LAROMER LR8996, LAROMER LR8869, LAROMER LR8889, LAROMER LR8997, LAROMER PO 83F, LAROMER PO 84F, LAROMER PO 94F, LAROMER PO 9067, LAROMER PO 9103, LAROMER PO 9106 and LAROMER PO77F, all available from BASF; AGISYN 701, AGISYN 702, AGISYN 703, NeoRad P-81 and NeoRad P-85 all available from DSM-AGI.

When present, amine synergists are typically included in the compositions of the present invention in an amount of about 0.1 wt% to about 7.0 wt%, based on the total weight of the composition. Note that the amount is the total amount of amine synergists in the composition, i.e. the sum of all the amine synergists included in the composition.

### EC Additives

The radiation-curable ink and coating compositions of the invention may contain the usual additives to modify flow, surface tension, gloss, and abrasion resistance of the cured coating or printed ink. These additives may function as leveling agents, in-can stabilizers, wetting agents, slip agents, flow agents, dispersants, and de-aerators. Preferred additives include fluorocarbon surfactants, silicones, and organic polymer surfactants, and inorganic materials such as talc. As examples, the Tegorad product lines (Tegorad are trademarks and are commercially available products of Tego Chemie, Essen, Germany), and the Solsperse product lines (Solsperse are trademarks and are commercially available products of Lubrizol Company). When present, additives are typically each individually present in an amount of about 0.1 wt% to about 5 wt%, based on the total weight of the composition. The total amount of EC additives (i.e. sum of all EC additives included in the composition) is equal to or less than 10.0 wt%, based on the total weight of the composition.

### Extenders

The radiation-curable ink and coating compositions of the present invention may contain the usual extenders, such as clay, talc, calcium carbonate, magnesium carbonate or silica to adjust water uptake, misting, and color strength. When present, the extenders are typically present in the compositions in an amount of about 0.5 wt% to about 5.0 wt%, based on the total weight of the composition. Note that the amount is the total amount of extenders, i.e. the sum of all of the extenders included in the composition.

### Cure mechanism

The energy-curable compositions of the present invention can be cured by any type of actinic radiation. For example, the radiation-curable compositions of the present invention can be UV-cured by an actinic light source, such as, for example, UV-light, provided by a high-voltage mercury bulb, a medium voltage mercury bulb, a xenon bulb, a carbon arc lamp, a metal halide bulb, a UV-LED lamp, or sunlight. The wavelength of the applied irradiation is preferably within a range of about 200 to 500 nm, more preferably about 250 to 350 nm. UV energy is preferably within a range of about 30 to 3000 mJ/cm², and more preferably within a range of about 50 to 500 mJ/cm². In addition, the bulb can be appropriately selected according to the absorption spectrum of the radiation curable composition. Moreover, the inks and coatings of this invention can be cured under inert conditions.

Alternatively, the radiation curable ink and coating compositions of this invention can be cured by electron beam (EB). Commercially, EB-dryers are available, for example, from Energy Science, Inc. of Wilmington, Mass, or from Advanced Electron Beams Inc. (AEB) of Wilmington, Mass. The energy absorbed, also known as the dose, is measured in units of kiloGrays (kGy), one kGy being equal to 1,000 Joules per kilogram. Usually, the electron beam dose should be within the range of 10 kGy to about 40 kGy for complete curing. With the radiation curable composition of this invention a radiation dose of 20-30 kGy at an oxygen level of < 200 ppm is usually sufficient to get a dry, solvent resistant coating or ink.

### Oligomers

Oligomers can be used as substances that provide the vehicle for the UV ink or coating. They are similar to monomers, except that they have already been partially polymerized, which makes them more viscous. During curing, the monomers react with the oligomers to create chains in three dimensions. In the printing industry, mainly resins/oligomers with acrylate functionality are used to provide the necessary reactivity to enable adequate cure for modern, high-speed presses.

The main classes of acrylated oligomers include epoxy acrylates; urethane acrylates; polyester acrylates; acrylic acrylates; hyperbranched polyester acrylates; waterborne UV polyerethane dispersions, and organic-inorganic hybrid materials.

### EXAMPLES

The present invention is further described by the following non-limiting examples, which further illustrate the invention, and are not intended to, nor should they be interpreted to, limit the scope of the invention.

### Example 1. Formulation of black inks.

Example I-1 and I-2 is a black inks made according to the present invention. Examples C-1 to C-3 are comparative black inks that contain either reduced amounts, or none, of CAB and/or aminosilane. The formulation of Examples C-1 to C-3, I-1, and I-2 are shown in Table 1.

**Table 1. Formulation of black inks**

| | **Comp. Ex. C-1** | **Comp. Ex. C-2** | **Comp. Ex. C3** | **Inv. Ex. I-2** | **Inv. Ex. I-1** |
|---|---|---|---|---|---|
| **Material** | **wt%** | **wt%** | **wt%** | **wt%** | **wt%** |
| ¹ Ebecryl 450 | 1.9 | 1.9 | 1.9 | 1.9 | 2.1 |
| ² Miramer M3190 | 5.8 | 5.8 | 5.8 | 5.8 | 6.3 |
| ³ Miramer M280 | 5.8 | 5.8 | 5.8 | 5.8 | 6.3 |
| ¹³ Miramer M3130 | 3.5 | 3.5 | 3.5 | 3.5 | 3.15 |
| Laromer PPTTA (tetrafunctional polyether acrylate) | 47.3 | 47.2 | 46.8 | 46.7 | 39.5 |
| ¹² Eastman CAB551-0.01 | 0 | 0 | 0.5 | 0.5 | 1.35 |
| Surfynol DF110D (defoamer) | 1 | 1 | 1 | 1 | 1 |
| ¹¹ Momentive Silquest A-Link 600 | 0 | 0.1 | 0 | 0.1 | 3 |
| ⁶ Omnirad 369 | 5 | 5 | 5 | 5 | 5.4 |
| ⁵ Radsol ICS-41 | 0.7 | 0.7 | 0.7 | 0.7 | 0.8 |
| Omnirad 907 (photoinitiator) | 6 | 6 | 6 | 6 | 6 |
| IGM ITX (photoinitiator) | 1 | 1 | 1 | 1 | 1 |
| Omnirad DETX (photoinitiator) | 1 | 1 | 1 | 1 | 1 |
| Special Black 250 pigment | 12.3 | 12.3 | 12.3 | 12.3 | 13.4 |
| ⁷ Black 7 pigment | 3.7 | 3.7 | 3.7 | 3.7 | 4 |
| ⁴Noveon Solsperse 39000 | 1.6 | 1.6 | 1.6 | 1.6 | 1.7 |
| ⁹ Sun Chemical Carbazole Violet dispersion | 1.7 | 1.7 | 1.7 | 1.7 | 2 |
| ¹⁰ Sun Chemical Phthalo Blue dispersion | 1.7 | 1.7 | 1.7 | 1.7 | 2 |
| | 100.00 | 100.00 | 100.00 | 100.00 | 100.00 |

| | | | | | |
|---|---|---|---|---|---|
| ¹EBECRYL 450 (Allnex) is a fatty acid modified polyester hexaacrylate; ²MIRAMER M3190 (Rahn)is Trimethylolpropane (EO-9) triacrylate; ³MIRAMER M280 (Rahn) is a polyethylenglycol 400 diacrylate; ⁴Noveon Solsperse^{™} 39000 (Lubrizol) is a 100% active polymeric dispersant; ⁵Radsol ICS-41 (Radsol Specialties) is a liquid polymerization inhibitor or storage stabilizer for photosensitive resins and monomers; ⁶IGM Resins Omnirad 369 is a photoinitiator for polymerizing unsaturated monomers and oligomers; ⁷Black 7 (Sun Chemical) is a black pigment; Sun Chemical ⁸FLLFV0481846 is an extender varnish manufactured by Sun Chemical; ⁹Sun Chemical Carbazole Violet dispersion (Sun Chemical 0610328-4407; UVF Carb Violet) is a dispersion of carbazole violet pigment; ¹⁰Sun Chemical Phthalo Blue dispersion (Sun Chemical 52241-4407-1; UVF Phthalo Blue) is a dispersion of phthalo blue pigment; ¹¹Momentive Silquest A-Link 600 is an aminosilane adhesion promoter; ¹²Eastman CAB551-0.01 is a CAB resin; ¹³Miramer M3130 is a trimethylolpropane triacrylate. | | | | | |

The density of cured coatings of Examples C-1 to C-3, I-1, and I-2 is 2.25, based on a single printed layer. A single layer was printed on a Harper QD printing and proofing system with a Harper flexographic bladed hand proofer, with a 5.0 BCM/500-line anilox, and cured with a UVEXS curing unit at a dose of approximately 70 mJ/cm². Density of the cured ink layer was measured with an X-Rite 428 densitometer.

### Example 2. Bond strength testing.

The laminate bond strength of Comparative Examples C-1 to C-4, and Inventive Example I-1, was tested. The results are shown in Table 2.

**Table 2. Bond strength**

| **Sample** | **Bond Strength¹ (g/linear-inch)** |
|---|---|
| Comp. Ex. C-1 | 0 (Decal) |
| Comp. Ex. C-2 | 10 (Decal) (3.94 g/cm) |
| Comp. Ex. C-3 | 5 (Decal) (1.97 g/cm) |
| Inv. Ex. I-2 | 50 (Decal) (19.69 g/cm) |
| Inv. Ex. I-1 | 165 (Destruct) (64.96 g/cm) |

| | |
|---|---|
| ¹A passing bond strength value would be ≥50 g/linear-inch (19.69 g/cm). | |

Table 2 shows that the Comparative Examples C-1 to C-3 fail the bond strength test. "Decal" indicates that the ink peels away from the substrate. Inventive Example I-1, with the combination of CAB and aminosilane, both within the claimed amounts, passes the bond strength test. "Destruct" indicates that the bond strength between the ink and substrate is such that the lamination construct is destroyed before the ink is removed when the laminate is pulled apart.

### Bond strength test method:

The ink was printed onto a white opaque polypropylene film using a Harper QD printing and proofing system with a Harper flexographic blades hand proofer, using a 5.0 BCM/500-line anilox, and cured with a UVEXS curing unit at a dose of approximately 70 mJ/cm². This is referred to below as the "printed film."

An energy-curable adhesive (Craiglam JG) was printed on top of the cured ink with a 4.1 BCM anilox. A clear polypropylene film was placed on top of the adhesive to produce a laminated film (i.e. laminated article), and the adhesive was cured.

The laminated film was cut into samples measuring 1 inch (2.54 cm) wide by up to 8.0 inches (20.32 cm) long. Bond strength testing was performed with an Instron Peel tester on the 1 linear inch (2.54 cm) width samples at a 11 inch/minute (27.94 cm/minute) pull rate, at a pull angle of 90°, at room temperature. The bond strength is reported as g/linear inch (g/2.54 cm).

As can be seen, using the composition of the invention results in several improved properties. The energy-curable compositions, when cured, have high color strength. The pigment dispersion made from the raw materials in the inventive example yielded a dispersion that was glossy and very fluid. Dispersions with poor flow and low color strength are indicators of a poor pigment dispersion, and the inventive composition had good flow and high color strength, indicating a good pigment dispersion. Prints made from the inventive ink yielded a print with a high color density with less pigment than the standard ink. Laminates prepared using the inventive ink have very strong lamination bond strength (destruct bonds) when attempts were made to separate the laminate structure. The inventive inks had strong adhesive to the substrate without use of a primer. One pass printing was sufficient to reach color value target density on the substrate. The inventive inks exhibited adequate curing with a reduced level of photoinitiators. In addition, the ink and coating compositions have good print quality at high press speeds.

The present invention has been described in detail, including the preferred embodiments thereof.

## Claims

1. An energy-curable black ink or coating composition, comprising:
(a) 50 wt% to 80 wt% one or more ethylenically unsaturated monomers, or one or more ethylenically unsaturated oligomers, or a combination of one or more ethylenically unsaturated monomers and one or more ethylenically unsaturated oligomers, based on the total weight of the composition;
(b) 0.5 wt% to 15 wt% one or more photoinitiators, based on the total weight of the ink or coating composition;
(c) 10 wt% to 25 wt% one or more black pigments, based on the total weight of the ink or coating composition;
(d) 0.1 wt% to 3.5 wt% one or more aminosilanes, based on the total weight of the ink or coating composition; and
(e) 0.1 wt% to 5 wt% one or more cellulose acetate butyrate resins, based on the total weight of the ink or coating composition;
wherein the composition has a color density of equal to or greater than 1.75 when printed and cured on a substrate.

2. The energy-curable black ink or coating composition of claim **1,** wherein the composition comprises 1 wt% to 3 wt% cellulose acetate butyrate (CAB), based on the total weight of the ink or coating composition.

3. The energy-curable black ink or coating composition of any preceding claim, wherein the composition comprises a carbon black pigment.

4. The energy-curable black ink or coating composition of any preceding claim, wherein the total photoinitiator content is less than 15 wt%, based on the total weight of the ink or coating composition.

5. The energy-curable black ink or coating composition of any preceding claim, wherein the total photoinitiator content is equal to or less than 10 wt%, based on the total weight of the ink or coating composition.

6. The energy-curable black ink or coating composition of any preceding claim, wherein the total photoinitiator content is equal to or less than 8 wt%, based on the total weight of the ink or coating composition;
optionally wherein the total photoinitiator content is equal to or less than 7 wt%, based on the total weight of the ink or coating composition.

7. The energy-curable black ink or coating composition of any preceding claim, further comprising 0.1 wt% to 2.0 wt% one or more additional colorants, based on the total weight of the ink or coating composition;
optionally wherein the one or more additional colorants comprise a blue or violet colorant.

8. The energy-curable black ink or coating composition of any preceding claim, comprising at least one ethylenically unsaturated oligomer.

9. The energy-curable ink or coating composition of claim 8, wherein the ethylenically unsaturated oligomer is an acrylated oligomer;
optionally wherein the acrylated oligomer is ethoxylated trimethylolpropane(EO)9 triacrylate water-compatible oligomer.

10. The energy-curable black ink or coating composition of any preceding claim, further comprising 0.1 wt% to 10 wt% one or more additives selected from the group consisting of polymeric dispersants and polymerization inhibitors, based on the total weight of the ink or coating composition.

11. The energy-curable black ink or composition of any preceding claim, wherein the composition is a flexographic ink or coating.

12. The energy-curable black ink or coating composition of any preceding claim, wherein the composition has a color density of equal to or greater than 2.00 when printed and cured on a substrate;
optionally wherein the composition has a color density of equal to or greater than 2.20 when printed and cured on a substrate.

13. A printed substrate comprising the energy-curable black ink or coating composition of any preceding claim.

14. A laminated article comprising the printed substrate of claim 13, wherein the printed side of the printed substrate is laminated to another substrate, so that the ink or coating composition of the present invention is between the two substrates.

15. The laminated article of claim 14:
(i) wherein the ink or coating composition exhibits a lamination bond strength value of greater than or equal to or greater than 19.7 g/cm (50 g/linear inch); and/or
(ii) wherein the article is a laminated packaging article.

## Patentansprüche

1. Energiehärtbare schwarze Tinten- oder Beschichtungszusammensetzung umfassend:
(a) 50 Gew.-% bis 80 Gew.-% an einem oder mehreren ethylenisch ungesättigten Monomeren oder einem oder mehreren ethylenisch ungesättigten Oligomeren oder einer Kombination von einem oder mehreren ethylenisch ungesättigten Monomeren und einem oder mehreren ethylenisch ungesättigten Oligomeren bezogen auf das Gesamtgewicht der Zusammensetzung;
(b) 0,5 Gew.-% bis 15 Gew.-% an einem oder mehreren Photoinitiatoren bezogen auf das Gesamtgewicht der Tinten- oder Beschichtungszusammensetzung;
(c) 10 Gew.-% bis 25 Gew.-% an einem oder mehreren schwarzen Pigmenten bezogen auf das Gesamtgewicht der Tinten- oder Beschichtungszusammensetzung;
(d) 0,1 Gew.-% bis 3,5 Gew.-% an einem oder mehreren Aminosilanen bezogen auf das Gesamtgewicht der Tinten- oder Beschichtungszusammensetzung; und
(e) 0,1 Gew.-% bis 5 Gew.-% an einem oder mehreren Celluloseacetatbutyratharzen bezogen auf das Gesamtgewicht der Tinten- oder Beschichtungszusammensetzung;
wobei die Zusammensetzung, wenn auf ein Substrat gedruckt und gehärtet, eine Farbdichte von gleich oder größer als 1,75 aufweist.

2. Energiehärtbare schwarze Tinten- oder Beschichtungszusammensetzung nach Anspruch 1, wobei die Zusammensetzung 1 Gew.-% bis 3 Gew.-% Celluloseacetatbutyrat (CAB) bezogen auf das Gesamtgewicht der Tinten- oder Beschichtungszusammensetzung umfasst.

3. Energiehärtbare schwarze Tinten- oder Beschichtungszusammensetzung nach einem der vorstehenden Ansprüche, wobei die Zusammensetzung ein Rußpigment umfasst.

4. Energiehärtbare schwarze Tinten- oder Beschichtungszusammensetzung nach einem der vorstehenden Ansprüche, wobei der Gesamt-Photoinitiatorgehalt weniger als 15 Gew.-% bezogen auf das Gesamtgewicht der Tinten- oder Beschichtungszusammensetzung beträgt.

5. Energiehärtbare schwarze Tinten- oder Beschichtungszusammensetzung nach einem der vorstehenden Ansprüche, wobei der Gesamt-Photoinitiatorgehalt gleich oder weniger als 10 Gew.-% bezogen auf das Gesamtgewicht der Tinten- oder Beschichtungszusammensetzung beträgt.

6. Energiehärtbare schwarze Tinten- oder Beschichtungszusammensetzung nach einem der vorstehenden Ansprüche, wobei der Gesamt-Photoinitiatorgehalt gleich oder weniger als 8 Gew.-% bezogen auf das Gesamtgewicht der Tinten- oder Beschichtungszusammensetzung beträgt;
wobei gegebenenfalls der Gesamt-Photoinitiatorgehalt gleich oder weniger als 7 Gew.-% bezogen auf das Gesamtgewicht der Tinten- oder Beschichtungszusammensetzung beträgt.

7. Energiehärtbare schwarze Tinten- oder Beschichtungszusammensetzung nach einem der vorstehenden Ansprüche, ferner umfassend 0,1 Gew.-% bis 2,0 Gew.-% an einem oder mehreren zusätzlichen Farbstoffen bezogen auf das Gesamtgewicht der Tinten- oder Beschichtungszusammensetzung;
wobei gegebenenfalls der eine oder die mehreren zusätzlichen Farbstoffe einen blauen oder violetten Farbstoff umfassen.

8. Energiehärtbare schwarze Tinten- oder Beschichtungszusammensetzung nach einem der vorstehenden Ansprüche, umfassend wenigstens ein ethylenisch ungesättigtes Oligomer.

9. Energiehärtbare Tinten- oder Beschichtungszusammensetzung nach Anspruch 8, wobei das ethylenisch ungesättigte Oligomer ein acryliertes Oligomer ist;
wobei gegebenenfalls das acrylierte Oligomer wasserverträgliches ethoxyliertes Trimethylolpropan(EO)9-triacrylat-Oligomer ist.

10. Energiehärtbare schwarze Tinten- oder Beschichtungszusammensetzung nach einem der vorstehenden Ansprüche, ferner umfassend 0,1 Gew.-% bis 10 Gew.-% an einem oder mehreren Zusatzstoffen ausgewählt aus der Gruppe bestehend aus polymeren Dispergiermitteln und Polymerisationshemmern, bezogen auf das Gesamtgewicht der Tinten- oder Beschichtungszusammensetzung.

11. Energiehärtbare schwarze Tinte oder Zusammensetzung nach einem der vorstehenden Ansprüche, wobei die Zusammensetzung eine Flexodrucktinte oder -beschichtung ist.

12. Energiehärtbare schwarze Tinten- oder Beschichtungszusammensetzung nach einem der vorstehenden Ansprüche, wobei die Zusammensetzung, wenn auf ein Substrat gedruckt und gehärtet, eine Farbdichte von gleich oder größer als 2,00 aufweist;
wobei gegebenenfalls die Zusammensetzung, wenn auf ein Substrat gedruckt und gehärtet, eine Farbdichte von gleich oder größer als 2,20 aufweist.

13. Bedrucktes Substrat umfassend die energiehärtbare schwarze Tinten- oder Beschichtungszusammensetzung nach einem der vorstehenden Ansprüche.

14. Laminierter Gegenstand umfassend das bedruckte Substrat nach Anspruch 13, wobei die bedruckte Seite des bedruckten Substrats auf ein anderes Substrat laminiert ist, so dass sich die Tinten- oder Beschichtungszusammensetzung der vorliegenden Erfindung zwischen den beiden Substraten befindet.

15. Laminierter Gegenstand nach Anspruch 14:
(i) wobei die Tinten- oder Beschichtungszusammensetzung einen Wert der Laminationsbindungsfestigkeit von größer als oder gleich oder größer als 19,7 g/cm (50 g/linear Inch) aufweist; und/oder
(ii) wobei der Gegenstand ein laminierter Verpackungsgegenstand ist.

## Revendications

1. Composition d'encre ou de revêtement noire durcissable par énergie, comprenant :
(a) 50 % en poids à 80 % en poids d'un ou plusieurs monomères éthyléniquement insaturés, ou d'un ou plusieurs oligomères éthyléniquement insaturés, ou d'une combinaison d'un ou plusieurs monomères éthyléniquement insaturés et d'un ou plusieurs oligomères éthyléniquement insaturés, sur la base du poids total de la composition ;
(b) 0,5 % en poids à 15 % en poids d'un ou plusieurs photoinitiateurs, sur la base du poids total de la composition d'encre ou de revêtement ;
(c) 10 % en poids à 25 % en poids d'un ou plusieurs pigments noirs, sur la base du poids total de la composition d'encre ou de revêtement ;
(d) 0,1 % en poids à 3,5 % en poids d'un ou plusieurs aminosilanes, sur la base du poids total de la composition d'encre ou de revêtement ; et
(e) 0,1 % en poids à 5 % en poids d'une ou plusieurs résines d'acétate butyrate de cellulose, sur la base du poids total de la composition d'encre ou de revêtement ;
dans laquelle la composition a une densité de couleur égale ou supérieure à 1,75 lorsqu'elle est imprimée et durcie sur un substrat.

2. Composition d'encre ou de revêtement noire durcissable par énergie selon la revendication 1, dans laquelle la composition comprend 1 % en poids à 3 % en poids d'acétate butyrate de cellulose (CAB), sur la base du poids total de la composition d'encre ou de revêtement.

3. Composition d'encre ou de revêtement noire durcissable par énergie selon l'une quelconque des revendications précédentes, dans laquelle la composition comprend un pigment de noir de carbone.

4. Composition d'encre ou de revêtement noire durcissable par énergie selon l'une quelconque des revendications précédentes, dans laquelle la teneur totale en photoinitiateur est inférieure à 15 % en poids, sur la base du poids total de la composition d'encre ou de revêtement.

5. Composition d'encre ou de revêtement noire durcissable par énergie selon l'une quelconque des revendications précédentes, dans laquelle la teneur totale en photoinitiateur est égale ou inférieure à 10 % en poids, sur la base du poids total de la composition d'encre ou de revêtement.

6. Composition d'encre ou de revêtement noire durcissable par énergie selon l'une quelconque des revendications précédentes, dans laquelle la teneur totale en photoinitiateur est égale ou inférieure à 8 % en poids, sur la base du poids total de la composition d'encre ou de revêtement ;
éventuellement la teneur totale en photoinitiateur est égale ou inférieure à 7 % en poids, sur la base du poids total de la composition d'encre ou de revêtement.

7. Composition d'encre ou de revêtement noire durcissable par énergie selon l'une quelconque des revendications précédentes, comprenant en outre 0,1 % en poids à 2,0 % en poids d'une ou plusieurs matières colorantes supplémentaires, sur la base du poids total de la composition d'encre ou de revêtement ;
éventuellement, la ou les matières colorantes supplémentaires comprennent une matière colorante bleue ou violette.

8. Composition d'encre ou de revêtement noire durcissable par énergie selon l'une quelconque des revendications précédentes, comprenant au moins un oligomère éthyléniquement insaturé.

9. Composition d'encre ou de revêtement durcissable par énergie selon la revendication 8, dans laquelle l'oligomère éthyléniquement insaturé est un oligomère acrylé ;
éventuellement dans laquelle l'oligomère acrylé est un oligomère de triacrylate de triméthylolpropane(EO)9 éthoxylé compatible avec l'eau.

10. Composition d'encre ou de revêtement noire durcissable par énergie selon l'une quelconque des revendications précédentes, comprenant en outre 0,1 % en poids à 10 % en poids d'un ou plusieurs additifs choisis dans le groupe constitué par les dispersants polymériques et les inhibiteurs de polymérisation, sur la base du poids total de la composition d'encre ou de revêtement.

11. Encre ou composition noire durcissable par énergie selon l'une quelconque des revendications précédentes, dans laquelle la composition est une encre ou un revêtement flexographique.

12. Composition d'encre ou de revêtement noire durcissable par énergie selon l'une quelconque des revendications précédentes, dans laquelle la composition a une densité de couleur égale ou supérieure à 2,00 lorsqu'elle est imprimée et durcie sur un substrat ;
éventuellement dans laquelle la composition présente une densité de couleur égale ou supérieure à 2,20 lorsqu'elle est imprimée et durcie sur un substrat.

13. Substrat imprimé comprenant la composition d'encre ou de revêtement noire durcissable par énergie selon l'une quelconque des revendications précédentes.

14. Article stratifié comprenant le substrat imprimé selon la revendication 13, dans lequel la face imprimée du substrat imprimé est stratifiée sur un autre substrat, de sorte que la composition d'encre ou de revêtement de la présente invention soit entre les deux substrats.

15. Article stratifié selon la revendication 14 :
(i) dans lequel la composition d'encre ou de revêtement présente une valeur de force de liaison de stratification supérieure ou égale ou supérieure à 19,7 g/cm (50 g/pouce linéaire) ; et/ou
(ii) dans lequel l'article est un article d'emballage stratifié.
